# EUROPEAN PATENT SPECIFICATION

(11) **EP 3 784 608 B1**
(45) Date of publication and mention of the grant of the patent: **29.01.2025**
(21) Application number: 19718757.8
(22) Date of filing: 25.04.2019
(51) Int. Cl.: B65G 21/20

(54) **SEALING APRON DEVICE**
DICHTUNGSSCHÜRZENVORRICHTUNG
DISPOSITIF DE TYPE TABLIER D'ÉTANCHÉITÉ

(30) Priority: 26.04.2018 NL 2020833; 26.04.2018 NL 2020834
(43) Date of publication of application: 03.03.2021
(73) Proprietor: TBK Group B.V., 3927 GH Renswoude (NL)
(72) Inventor: KELDERMAN, Albertus, 3927 GH RENSWOUDE (NL)
(74) Representative: Melchior, Robin
(86) International application number: PCT/EP2019/060640
(87) International publication number: WO 2019/207056

(56) References cited:
- EP-A1- 0 536 847
- EP-A1- 0 825 137

## Description

### BACKGROUND

The invention relates to a sealing apron device for a conveyor device.

A sealing apron device according to the preamble of claim 1 is for example known from EP 0825137 A1. EP 0825137 A1 discloses an installation for the formation of a sealing apron along a conveyor belt by using sealing apron blocks in the form of panels which can be moved individually with respect to the frame of the installation towards the conveyor belt, characterized in that that the panels comprise a series of parallel grooves which extend transversely to the direction in which the panels can be moved and in that each of them is retained by a retaining member which comprises a means of blocking the panel through an element that is supported in a groove belonging to the panel.

A bulge is provided which is located at the upper part of the panel, to provide a striking surface suitable for a hammer or a mallet, for adjusting each panel to a given height relative to the conveyor.

### SUMMARY OF THE INVENTION

A disadvantage of the known sealing apron device is that the hammer or mallet blows could dislocate a panel with respect to an adjacent panel or the retaining member. Also, the friction between the panel and the moving conveyor belt could cause a rotation of the panel relative to the retaining member in the direction of conveyance. Another disadvantage of the known sealing apron device is that the clamping force of the retaining member for holding the panel to the supporting frame can be unintentionally adjusted to a level that damages the panel. Moreover, the nut or nuts have to be loosened to move the panel towards the conveyor belt.

It is an object of the present invention to provide an alternative sealing apron device, wherein a dislocation and/or rotation of a sealing apron block with respect to an adjacent sealing apron block or a retaining member can be prevented.

According to a first aspect, the invention provides a sealing apron device for a transport system, wherein the transport system comprises a conveyor and a wall arranged above said conveyor, wherein the sealing apron device comprises a sealing apron block for sealing gaps between the wall and the conveyor in a sealing direction and a holder for holding said sealing apron block relative to said wall in a mounting plane parallel to said sealing direction, wherein the sealing apron block comprises a main body and a protrusion extending away from said main body in a protrusion direction perpendicular to the sealing direction, wherein the sealing apron block is adjustable with respect to the holder in the sealing direction along an adjustment path by applying blows of a hammer or a mallet to the protrusion, wherein the holder comprises a bracket with a mounting section for mounting the bracket relative to the wall and a retaining section for retaining the sealing apron block in the sealing direction, wherein the retaining section comprises a retaining part for clamping the sealing apron block in a clamping direction transverse to the mounting plane, wherein the retaining section further comprises a guiding part for guiding the protrusion of the sealing apron block along at least a part of the adjustment path, wherein the guiding part is arranged for engaging the protrusion of the sealing apron block along at least a part of the adjustment path.

By guiding the protrusion of the sealing apron block, the sealing apron block can be guided at the location where the blows of the hammer or the mallet are applied. Hence, the sealing apron block is less prone to dislocation with respect to an adjacent sealing apron block and/or rotation with respect to the bracket.

In a further advantageous embodiment, the guiding part and the protrusion are in mutual engagement along at least a part of the adjustment path.

In a further embodiment, the sealing apron block is arranged to be adjusted with respect to the holder from a start position into an end position along the adjustment path, wherein the retaining part is arranged for engaging the sealing apron block at least when the sealing apron block is in a first part of the adjustment path between the start position and an intermediate position between the start position and the end position. The sealing apron block can thus be retained in at least the first part of the adjustment path.

In a further embodiment thereof, the guiding part is arranged for engaging the protrusion of the sealing apron block at least when the sealing apron block is in a second part of the adjustment path between the intermediate position and the end position. In the first part of the adjustment path, the sealing apron block is still in or close to its starting position and thus less prone to dislocation. It is during the second part of the adjustment path, when the engagement between retaining member and the sealing apron block is released, that the guiding becomes more important.

In a further embodiment thereof, the retaining part is arranged for at least partially running out of the engagement with the sealing apron block in the sealing direction when the sealing apron block is in the second part of the adjustment path. Consequently, the guiding of the protrusion can at least partially compensate for the running out of engagement of the retaining part. Together, the guiding part and the retaining part can still effectively prevent dislocation.

In a further embodiment, the guiding part and the retaining part are arranged for simultaneously engaging the sealing apron block in at least a part of the adjustment path. Together, the guiding part and the retaining part can effectively prevent dislocation.

In a further embodiment, the guiding part is arranged for engaging the sealing apron block at one or more guiding positions, wherein the retaining part is arranged for engaging the sealing apron block at one or more retaining positions, wherein the one or more guiding positions are spaced apart from the one or more retaining positions. By having the spaced apart positions, the position of the sealing apron block relative to the bracket can be more defined and the sealing apron block is less prone to dislocation in the form of tilt or rotation relative to said positions.

In a further embodiment, the guiding part comprises one or more guides extending in the sealing direction for engaging the protrusion of the sealing apron block. The one or more guides can linearly guide the protrusion in the sealing direction.

In a further embodiment thereof, the bracket comprises a bracket opening for receiving the protrusion in the protrusion direction and wherein the one or more guides comprises two guides which are arranged on either side of the bracket opening for engaging the part of the protrusion extending through the bracket opening. The spaced apart guides on opposite sides of the bracket opening can more accurately guide the protrusion in the sealing direction while preventing dislocation in the form of tilt or rotation about an axis between those guides.

In a further embodiment thereof, the two guides are formed by the edges of the bracket opening. Hence, the guides can be formed conveniently as integral elements of the guiding part without requiring separate guiding means.

In a further embodiment, the protrusion comprises a head portion and a neck portion that connects the head portion to the main body, wherein the neck portion has a neck width and the head portion has a head width in a width direction parallel to the mounting plane and perpendicular to the sealing direction, wherein the guides are arranged for engaging the protrusion at said neck portion. Hence, the guides can be securely received between the head portion and the main body, thereby limiting movement, in particular rotation, of the sealing apron block relative to the bracket.

In a further embodiment thereof, the bracket opening has an upper portion and lower portion that is downstream with respect to said upper portion in the sealing direction, wherein the upper portion has a receiving width in the width direction that is equal to or greater than the head width, wherein the lower portion has a guiding width in the width direction that is smaller than the head width and equal to or larger than the neck width. Hence, the protrusion can be received into and retracted out of the bracket opening through the upper portion, while the lower portion of the bracket opening can prevent retraction of the head portion out of the bracket opening.

In a further embodiment thereof, the guides are arranged in the lower portion only. Hence, the protrusion can be received through the bracket opening at the upper portion without interference from the guides while the protrusion can be brought in engagement with the guides when the sealing apron block is moved along the adjustment path in the sealing direction into the second portion of the bracket opening.

In a further embodiment thereof the bracket comprises a stop part for limiting a movement of the protrusion in the sealing direction. The stop part can prevent a release of the sealing apron block from the bracket in the sealing direction.

Preferably, the neck portion is defined by two side recesses which are arranged for engaging the two guides and a bottom recess which is arranged for engaging the stop part. The simultaneous engagement of the side recesses with the guides and of the bottom recess with the stop part can further prevent rotation of the sealing apron block relative to the bracket, for example as a result of the friction between the sealing apron block and the moving conveyor, even when said sealing apron block is in the end position at the stop part.

In a further embodiment, the protrusion direction is opposite to the clamping direction. Hence, the protrusion extends away from the wall and can be easily accessed for applying the blows of the hammer or the mallet.

In a further embodiment, the retaining part comprises one or more saw teeth for biting into the sealing apron block in the clamping direction. Said one or more saw teeth can therefore securely retain the sealing apron block.

In a further embodiment thereof, the one or more saw teeth each comprise a wedge-shaped surface that is inclined in the clamping direction and the sealing direction towards the sealing apron block. The wedge-shaped surface ensures that - when a sufficient force is applied to the protrusion in the sealing direction - the relative movement of the sealing apron block with respect to the one or more saw teeth in the sealing direction temporarily displaces the one or more saw teeth out of biting engagement with said sealing apron block. Hence, the position of the sealing apron block in the sealing direction can be adjusted by forcing the sealing apron block over the tops of the one or more saw teeth over a short distance in the sealing direction before the one or more saw teeth bitingly engage the sealing apron block again.

In a further embodiment, the retaining section is resiliently flexible with respect to the mounting section in a direction away from the sealing apron block, wherein the sealing apron block is arranged to displace the retaining section relative to the mounting section through sliding contact with the wedge-shaped surface of the one or more saw teeth in the sealing direction. The resilience allows for the one or more saw teeth to be displaced by the apron sealing block to allow for the aforementioned adjustment.

In a further embodiment, the sealing apron block comprises one or more grooves extending through the main body in the sealing direction, wherein each groove is arranged for receiving the retaining part. Hence, the retaining part and the one or more grooves can provide an additional guiding of the sealing apron block.

In a further embodiment, the protrusion forms a striking surface for receiving the blow of a hammer or a mallet in the sealing direction. By providing a dedicated striking surface, the blows of the hammer or the mallet can be received at a well-defined surface, thereby preventing that the hammer or mallet slips and damages other parts of the sealing apron device.

In a further embodiment, the main body has a first side and a second side opposite to the first side in the clamping direction, wherein the main body comprises an abutment surface at said second side thereof for directly abutting the wall. When the abutment surface directly abuts the wall, accumulation of dirt or bulk material between the wall and the sealing apron block can be prevented.

In a further embodiment, the retaining section is arranged for retaining the sealing apron block in a position relative to mounting section such that the mounting plane is coplanar with the wall. Thus, the sealing apron block can abut the wall in the mounting plane.

In a further embodiment, the sealing apron device comprises a further sealing apron block directly adjacent to the sealing apron block. Hence, the sealing apron block and the adjacent sealing apron block can be individually adjusted in the sealing direction. Thus, the contour of the conveyor can be followed more precisely by the sealing apron device and a better sealing can be achieved.

In a further embodiment thereof, the sealing apron block comprises a first profile at its lateral side facing the further sealing apron block and the further sealing apron block comprises a second profile at its lateral side facing the sealing apron block, wherein the first profile of the sealing apron block and the second profile of the directly adjacent further sealing apron block are complementary profiles. Thus, two adjacent sealing apron block can form a contiguous or continuous sealing apron. Hence, gap forming between adjacent sealing apron blocks can be prevented. Consequently, accumulation of dirt or bulk material between adjacent sealing apron blocks can be prevented.

In a further embodiment thereof, the sealing apron block further comprises a third profile identical or substantially identical to the second profile. Hence, another further sealing apron block can be fitted against the sealing apron block to form a contiguous or continuous sealing apron.

In a further embodiment, the first profile and the second profile are stepped profiles. Hence, the profiles of adjacent sealing apron block can be overlapped. Thus, gaps between adjacent sealing apron blocks can be prevented. Moreover, the stepped profiles can be front fitted.

According to a second aspect, the invention provides an assembly comprising a transport system and a sealing apron device according to the invention, wherein the transport system comprises a conveyor and a wall arranged above said conveyor. The assembly comprises the sealing apron device according to the first aspect of the invention and thus has the same technical advantages, which will not be repeated hereafter for reasons of conciseness.

According to a third aspect, the invention provides a method for sealing a gap between a wall and a conveyor using the sealing apron device according to the invention, wherein the method comprises the step of mounting the sealing apron block and the bracket to the wall by fixedly securing the mounting section with respect to the wall.

The retaining part exerts a clamping force on the sealing apron block which can be independent of a fastening torque at the mounting section such that the sealing apron block can be clamped by a predetermined clamping force and no alteration of the fastening torque is required between retaining and adjustment. Consequently, damaging the sealing apron block through an excessive clamping force can be prevented.

In an embodiment thereof, the method further comprises the step of adjusting the sealing apron block along the adjustment path towards the conveyor by exerting an adjustment force to the sealing apron block in the sealing direction, wherein the retaining section is resiliently flexible with respect to the mounting section in a direction away from the sealing apron block, wherein the adjustment of the sealing apron block along the adjustment path displaces the retaining section relative to the mounting section through sliding contact with the retaining part. The relative movement of the sealing apron block with respect to the retaining part in the sealing direction can temporarily displace the retaining part. Hence, the position of the sealing apron block in the sealing direction can be adjusted by forcing the sealing apron block over a short distance in the sealing direction.

In a further embodiment thereof, the sealing apron block is adjusted along the adjustment path without loosening the mounting section with respect to the wall. Hence, the sealing apron blocks can be adjusted more easily.

### BRIEF DESCRIPTION OF THE DRAWINGS

The invention will be elucidated on the basis of an exemplary embodiment shown in the attached schematic drawings, in which:
Figure 1 shows an isometric view of a transport system comprising a conveyor, a wall and an apron device according to the present invention;
figure 2 shows an isometric view of the sealing apron device according to figure 1 comprising a plurality of sealing apron blocks and a plurality of brackets;
figure 3 shows a top view of a plurality of the sealing apron blocks according to figure 2;
figure 4 shows an exploded view of a part of the sealing apron device according to figure 2;
figure 5 shows a section view of one of the sealing apron blocks mounted to the wall by one of the brackets in a start position according to the line V-V in figure 2;
figure 6 shows a section view of one of the sealing apron blocks mounted to the wall by one of the brackets in an intermediate position according to the line VI-VI in figure 2;
figure 7 shows a section view of one of the sealing apron blocks mounted to the wall by the bracket in an end position according to the line VII-VII in figure 2;
figures 8-10 show front views of the sealing apron block mounted to the wall according to figures 5-7, respectively; and
figure 11 shows a section view of the sealing apron block mounted to the wall according to line XI-XI in figure 10.

### DETAILED DESCRIPTION OF THE INVENTION

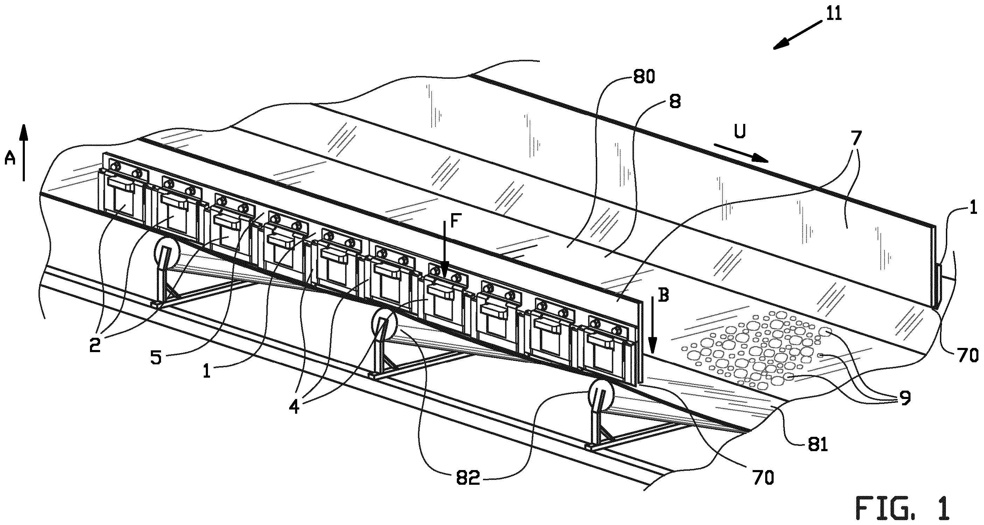

Figure 1 shows a transport system 11 for transporting bulk material 9. The transport system 11 comprises a conveyor 8 for conveying said bulk material 9. The transport system 11 further comprises a set of walls 7 arranged above the conveyor 8 for preventing an overflow of the bulk material 9 over the sides of the conveyor 8. The transport system 11 further comprises a sealing apron device 1 according to an exemplary embodiment of the present invention for sealing any gaps 70 between the wall 7 and the conveyor 8.

As can best be seen in figure 1, in this exemplary embodiment, the transport system 11 is arranged for receiving the bulk material 9 and for transporting the bulk material 9 in a transport direction U along the conveyor 8. The conveyor 8 comprises a conveyor belt 80 having a concave or substantially concave transport surface 81 extending in the transport direction U. In particular, the transport surface 81 has a trough form in cross section. The conveyor belt 80 is supported by rotatable support rolls 82, e.g. mounted on a centering assembly according to EP 2 451 730 B1. The support rolls 81 allow the conveyor belt 80 to progress in the transport direction U. The support rolls 82 are spaced apart in the transport direction U. Between the support rolls 82, the conveyor belt 80 may flex, causing the transport surface 81 to be uneven or undulating.

The walls 7 extend above and along the conveyor 8 in the transport direction U. Each wall 7 is provided with the sealing apron device 1 according to the invention.

The sealing apron device 1 comprises a plurality of sealing apron blocks 2 which are individually adjustable in a sealing direction B for contacting the conveyor 8. In other words, the sealing apron blocks 2 are arranged for sealing gaps 70 between the wall 7 and the conveyor 8 in the sealing direction B. In particular, the sealing apron blocks 2 are arranged for contacting the transport surface 81 of the conveyor belt 80. In this embodiment, the sealing direction B is parallel or substantially parallel to the wall 7. More particularly, in this embodiment, the sealing direction B is directed in a downward or vertical direction.

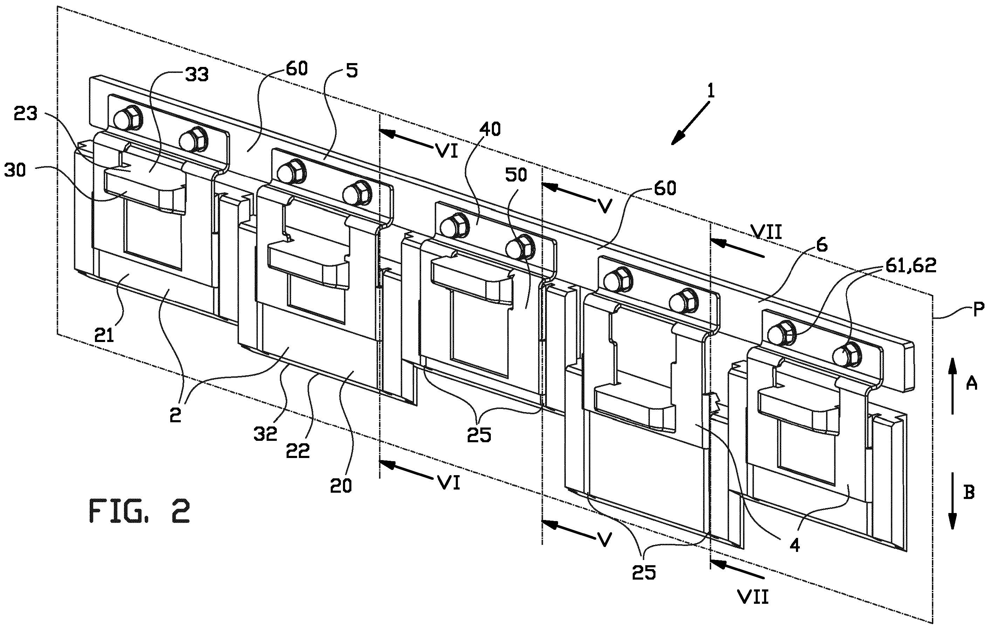

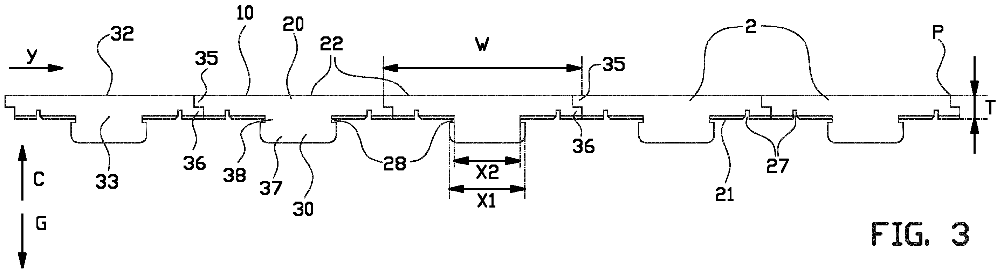

As can best be seen in figures 1 and 2, the sealing apron device 1 further comprises a holder 5 for holding the sealing apron blocks 2 relative to the wall 7 in a mounting plane P parallel to the sealing direction B. The sealing apron blocks 2 are adjustable with respect to the holder 5 in the sealing direction B along an adjustment path L. As is best shown in figure 3, the sealing apron blocks 2 form a contiguous or a substantially contiguous sealing apron 10 in the transport direction U in the mounting plane P along the wall 7. In other words, the sealing apron blocks 2 form a continuous or a substantially continuous sealing apron 10 in the transport direction U along the wall 7.

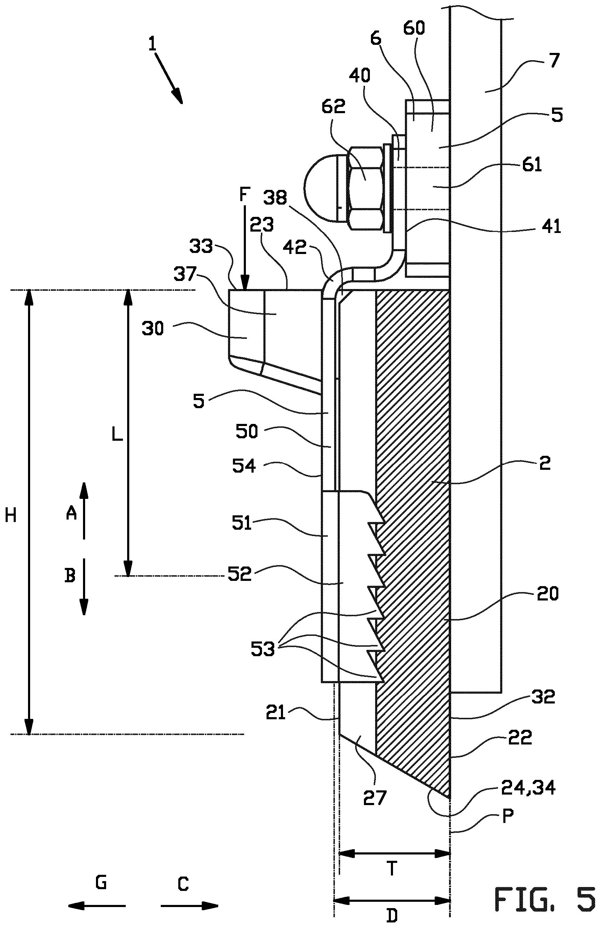

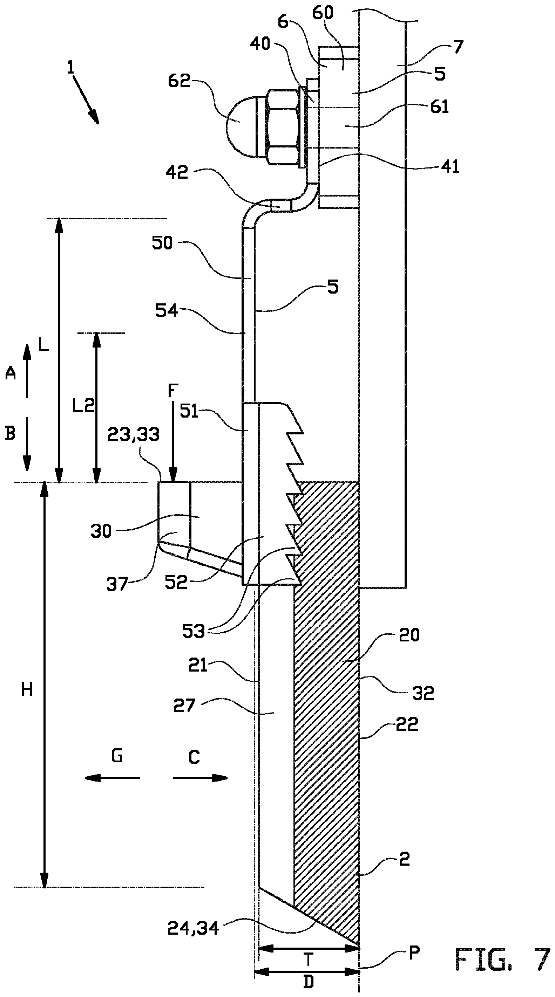

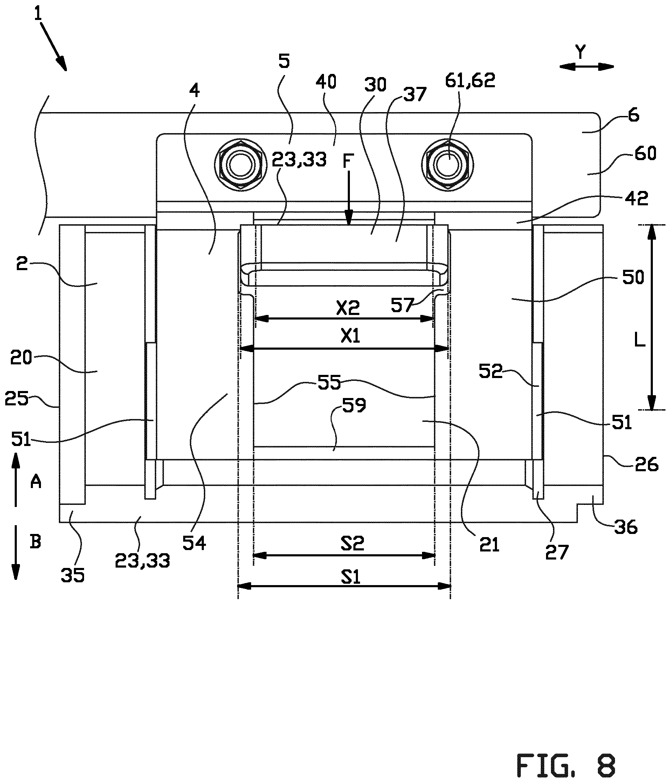

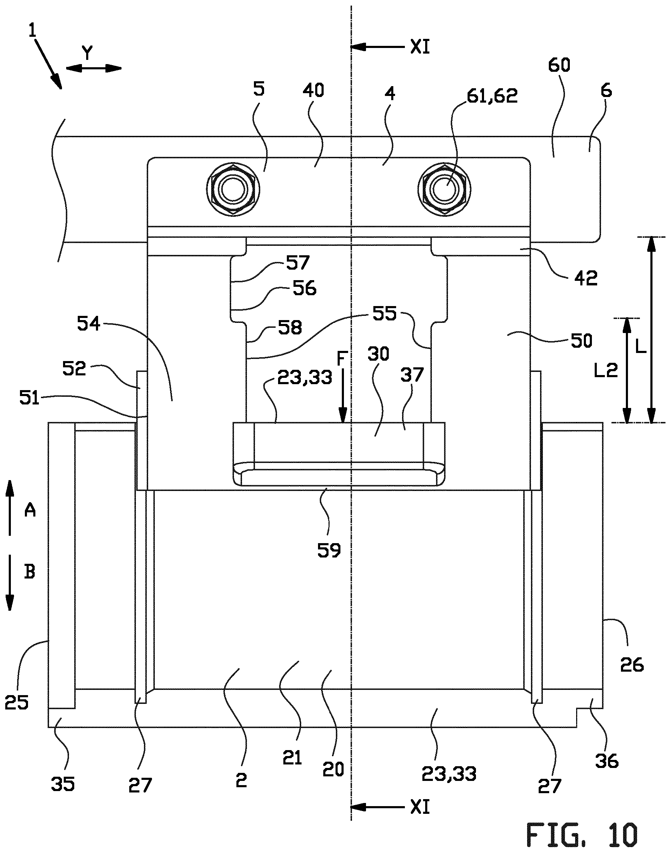

As can best be seen in figure 2, the holder 5 comprises one or more brackets 4 for mounting and retaining the sealing apron blocks 2 with respect to the wall 7. In particular, the sealing apron blocks 2 of the sealing apron device 1 are each mounted to the wall 7 by a respective bracket 4. The brackets 4 are arranged for clamping the sealing apron blocks 2 against the wall 7 in a clamping direction C transverse to the mounting plane P. The brackets 4 are arranged for retaining the sealing apron blocks 2 with respect to the wall 7 in a retaining direction A opposite to the sealing direction B while permitting adjustment of the sealing apron blocks 2 in the sealing direction B when a sufficiently large adjustment force F is applied to the sealing apron block 2 in the sealing direction B. Said adjustment force F can for example be a blow of a hammer or mallet. In particular, the sealing apron blocks 2 are adjustable with respect to the brackets 4 in the sealing direction B between a start position, as shown in figures 5 and 8, and an end position, as shown in figures 7 and 10, along the adjustment path L.

The brackets 4 may be mounted directly to the wall 7. However, in this example, the holder 5 comprises a common mounting member 6 for mounting the brackets 4 with respect to the wall 7 at the mounting plane P. The brackets 4 are mounted to the wall 7 or the common mounting member 6 using suitable fasteners 61, 62, e.g. bolts.

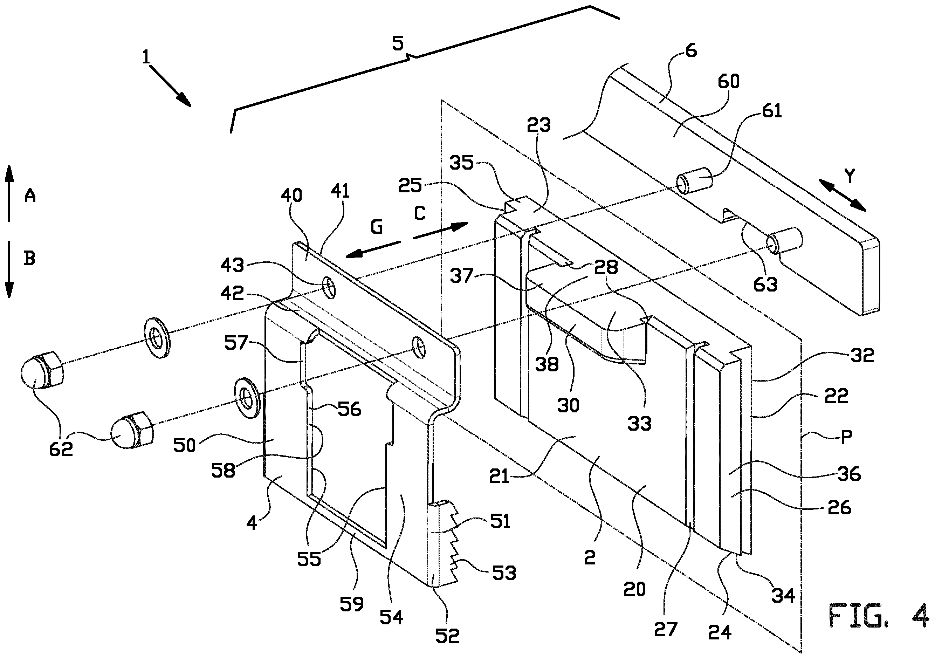

As can best be seen in figures 3 and 4, the sealing apron block 2 comprises a main body 20. The main body has a first side 21 and a second side 22 opposite to the first side 21 in the clamping direction C. The main body 20 has a block thickness T in the clamping direction C. At said second side 22, the main body 20 comprises an abutment surface 32 for abutting the wall 7. The abutment surface 32 is in line with the mounting plane P for mounting the sealing apron block 2 relative to the wall 7. The main body 20 comprises an upper side 23 and a lower side 24 opposite to the upper side 23 in the sealing direction B. In this exemplary embodiment, the lower side 24 of the main body 20 comprises an inclined wear surface 34 inclined towards or as to match an inclination angle of the transport surface 81. At its first side 21, the main body 20 extends from the upper side 23 to the lower side 24 in the sealing direction B over an initial block height H, as is best shown in figures 5-7.

The main body 20 further comprises a first lateral side 25 and a second lateral 26 side opposite to the first lateral side 25 in a width direction Y, parallel to the mounting plane P and perpendicular to the sealing direction B. In this particular embodiment, the width direction Y is parallel to the transport direction U. The main body 20 extends from the first lateral side 25 to the second lateral side 26 in the width direction Y over a block width W.

The sealing apron block 2 comprises a protrusion 30 extending away from the first side 21 of the main body 20 in a protrusion direction G. In this exemplary embodiment, the protrusion direction G is opposite to the clamping direction C. The protrusion 30 is located at or near the upper side 23 of the main body 20. The protrusion 30 comprises a head portion 37 and a neck portion 38 that connects the head portion 37 with the main body 20. The head portion 37 of the protrusion 30 extends in the width direction Y over a head width X1. The head width X1 is smaller than the sealing apron block width W.

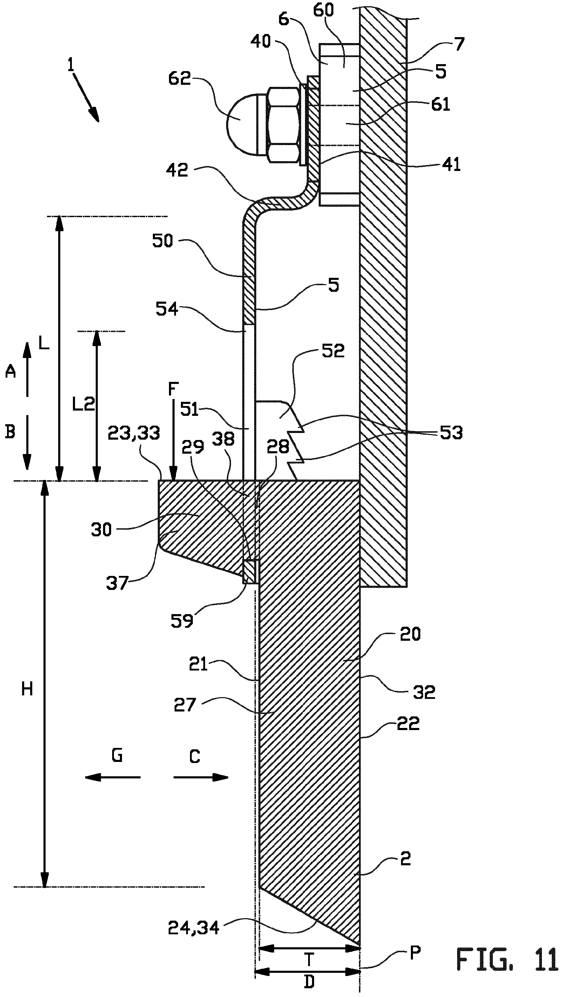

As shown in figure 3, the neck portion 38 of the protrusion 30 is formed by two side recesses 28 undercutting the protrusion 30 in the width direction Y. The neck portion 38 has a neck width X2 in said width direction Y. The neck width X2 is smaller than the head width X1. As best seen in figure 11, the neck portion 38 is further defined by a bottom recess 29 facing in the sealing direction B.

The protrusion 30 forms a striking surface 33 for receiving the adjustment force F. The striking surface 33 faces in or substantially in the retaining direction A. In this exemplary embodiment, the protrusion 30 lies flush with the upper side 23 of the main body 20 for forming the striking surface 33.

The sealing apron block 2 comprises two parallel grooves 27. The grooves 27 extend through the main body 20 from the upper side 23 to the lower side 24 in the sealing direction B. In this embodiment, the grooves 27 are located at the first side 21 of the main body 20. The grooves 27 are located on either side of the protrusion 30 in the width direction Y.

As is best shown in figure 3, the sealing apron device 1 comprises a further sealing apron block 2 directly adjacent to the sealing apron block 2. The further sealing apron block 2 is identical or substantially identical to the sealing apron block 2 having essentially the same features. The sealing apron block 2 comprises a first profile 36 at its first lateral side 26 facing the further sealing apron block 2. The further sealing apron block 2 comprises a second profile 37 at its second lateral side 27 facing the sealing apron block 2. In this embodiment, the sealing apron block 2 comprises a third profile at its second lateral side 27 identical to the second profile 37. The first profile 36 and the second profile 37 of two adjacent blocks 2 are complementary profiles. In particular, the first profile 36 and the second profile 37 are stepped profiles. The first profile 36 of the sealing apron block 2 is arranged to be fitted between the wall 7 and the second profile 37 of a further sealing apron block 2 upstream in the width direction Y and directly adjacent to the sealing apron block 2.

As can best be seen in figure 4, the bracket 4 comprises a mounting section 40 for mounting the bracket 4 relative to the wall 7 and a retaining section 50 for retaining the sealing apron block 2 in the sealing direction B. The bracket 4 further comprises a bridge section 42 for connecting the retaining section 50 to the mounting section 40. In this exemplary embodiment, the retaining section 50, the mounting section 40 and the bridge section 42 are formed as one piece and/or integral. In other words, the bracket 4 is formed in one piece and/or as a single part. In particular, the bracket 4 is formed from a single piece of plate material. The bridge section 42 is formed as a bend in the plate material. In this exemplary embodiment, the bridge section 42 extends transverse to the mounting plane P. The retaining section 50 extends parallel to the mounting plane P along the entire adjustment path L. The mounting section 40 and the retaining section 50 are both oriented parallel to the mounting plane P. The mounting section 40 and the retaining section 50 are spaced apart in the clamping direction C over a fixed distance.

The retaining section 50 comprises a retaining part 51 for clamping the sealing apron block 2 in a clamping direction C transverse to the mounting plane P. The retaining section 50 is arranged for retaining the sealing apron block 2 in a position relative to mounting section 40 such that the mounting plane P is coplanar with the wall 7. The retaining part 51 is further arranged for retaining the sealing apron block 2 in the retaining direction A. The retaining part 51 is however configured for permitting the sealing apron block 2 to move in the sealing direction B when the adjustment force F is applied. The mounting section 40 and the retaining section 50 are spaced apart in the sealing direction B.

The retaining part 51 is arranged for engaging the sealing apron block 2 at least when the sealing apron block 2 is in a first part L1 of the adjustment path L between the start position and an intermediate position between the start position and the end position. The retaining part 51 engages the sealing apron block in one or more retaining positions. The retaining part 51 is arranged for at least partially running out of the engagement with the sealing apron block 2 in the sealing direction B when the sealing apron block 2 is in a second part L2 of the adjustment path L downstream in the sealing direction B, as is best shown in figure 7.

In this exemplary embodiment, the retaining part 51 comprises one or more saw teeth 53 for biting into the sealing apron block 2 in the clamping direction C. More particularly, a plurality of saw teeth 53. The saw teeth 53 each comprise a wedge-shaped surface that is inclined in the clamping direction C and the sealing direction B towards the sealing apron block 2. In particular, the saw teeth 53 are arranged for allowing a one-way displacement of the sealing apron block 2 in the sealing direction B. The retaining section 50 is resiliently flexible

The retaining part 51 is substantially U-shaped, having two parallel or substantially parallel legs 52 extending in the clamping direction C towards the grooves 27. The grooves 27 are arranged for receiving the legs 52 of the bracket 4. The saw teeth 53 are located at the respective terminal ends of the legs 52. In this embodiment, the one or more retaining positions are located at or near the terminal ends of the saw teeth 53.

As is best shown in figures 7-10, in an embodiment, the retaining section 50 of the bracket 4 further comprises a guiding part 54 for guiding the sealing apron block 2. In particular, the guiding part 54 is arranged for guiding the protrusion 30 of the sealing apron block 2 along at least a part of the adjustment path L. More particularly, as is clearly shown in figure 2, the guiding part 54 is arranged for guiding the protrusion 30 by directly engaging said protrusion 30, i.e. in a face to face contact. Preferably, the guiding part 54 is arranged to guide the protrusion 30 over the entire or substantially the entire adjustment path L. The guiding 54 part engages the sealing apron block 2 at one or more guiding positions. In this embodiment, the guiding positions are located within the side recesses 28. The guiding part 54 is arranged for engaging the protrusion 30 of the sealing apron block 2 at least when the sealing apron block 2 is in the second part L2 of the adjustment path L. In this embodiment, the guiding part 54 and the retaining part 51 are arranged for simultaneously engaging the sealing apron block 2 in at least a part of the adjustment path L. In particular, the guiding part 54 and the retaining part 51 are arranged for simultaneously engaging the sealing apron block in the one or more guiding positions and the one or more retaining positions, respectively. The guiding positions are spaced apart from the retaining positions.

The guiding part 54 comprises two parallel guides 55 extending in or substantially in the sealing direction B for engaging the protrusion 30 of the sealing apron block 2.

In this particular embodiment, the guiding part 54 comprises a bracket opening 56 for receiving and guiding the protrusion 30 of the sealing apron block 2. The protrusion 30 extends through the bracket opening 56 in the protrusion direction G. The guides 55 are arranged on either side of the bracket opening 56 for constraining movements of the protrusion 30 in the width direction Y. The guides 55 are arranged for engaging the protrusion 30 at said neck portion 38. In this exemplary embodiment, the guides 55 are formed by the edges of the bracket opening 56.

As shown in figure 8, the bracket opening 56 has an upper portion 57 and a lower portion 58 downstream in the sealing direction with respect to said upper portion 57. The upper portion has a receiving width S1 in the width direction Y that is equal to or greater than the head width X1. The upper portion 57 is arranged for receiving the protrusion 30 in the start position. The lower portion 58 has a guiding width S2 in the width direction Y that is smaller than the head width X1 and equal or larger than the neck width X2.

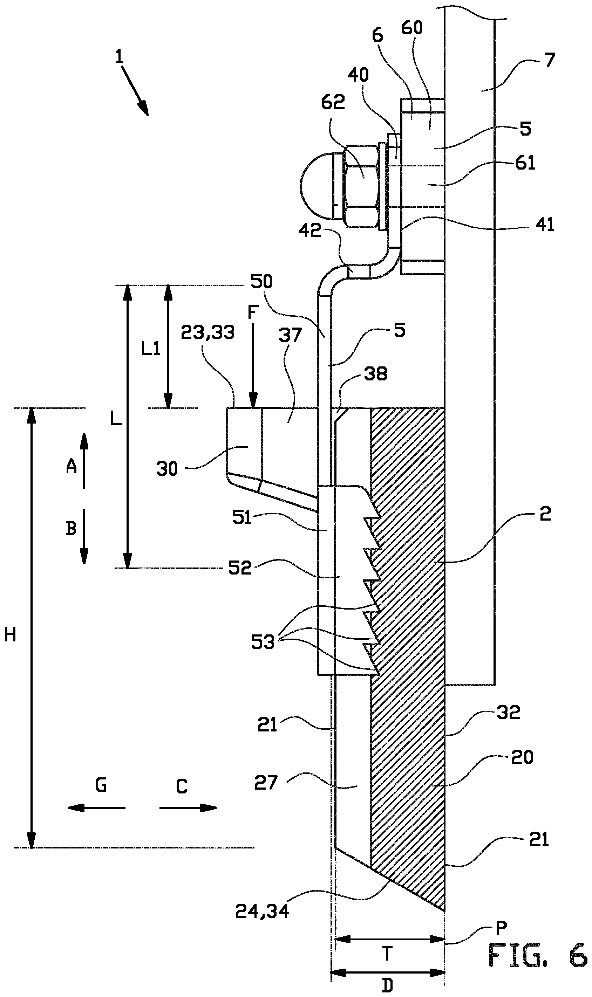

In this exemplary embodiment, the guides 55 are arranged in the lower portion 38 only. As is best shown in figure 6, the guides 55 and the side recesses 28 are in mutual engagement when the protrusion 30 is displaced from the start position towards the end position into an intermediate position.

The bracket 4 further comprises a stop part 59 bounding the bracket opening 56 at its lower end for constraining the movement of the sealing apron block 2 in the sealing direction B. The stop part 59 can prevent that the protrusion 30 moves in the sealing direction B beyond the end position as shown in figure 11. The stop part 59 is arranged for abutting the protrusion 30 of the sealing apron block 2 in the end position. In particular, as shown in figure 11, the stop part 59 is arranged for engaging the bottom recess 29 at the neck portion 38 of the protrusion 30.

In the exemplary embodiment as shown in figures 5-7, the mounting section 40 comprises a mounting surface 41 for mounting the mounting section 40 relative to the wall 7. The mounting surface 41 faces the mounting plane P. In this example, the mounting section 40 further comprises one or more fastener holes 43 for receiving the fasteners 61, 62. The mounting section 40 is rigidly mounted to the wall 7. In other words, the mounting section 40 is prevented or substantially prevented from moving with respect to the wall 7. When the mounting section 40 is mounted to the wall 7, the orientation of the mounting surface 41 relative to the wall 7 and/or a mutual distance between the mounting surface 41 and the wall 7 is independent of a fastening force of the fasteners 61, 62.

The retaining section 50 is solely connected to the mounting section 40 by the bridge section 42. In other words, the retaining section 50 is solely supported by the mounting section 40. Preferably, the retaining section 50 is resiliently connected to the mounting section 40. More particularly, the retaining section 50 is resiliently flexible with respect to the mounting section 40 in a direction away from the sealing apron block 2. The sealing apron block 2 is arranged to displace the retaining section 50 relative to the mounting section 40 through sliding contact with the wedge-shaped surface of the saw teeth 53 in the sealing direction B. The retaining section 50 and the wall 7 are spaced apart in the clamping direction C over a clamping distance D. The clamping distance D is larger than the block thickness T of the sealing apron block 2. As a result, the mounting section 40 can be rigidly mounted relative to the wall 7 without a tolerance. The clamping distance D between the retaining part 51 and the mounting plane P in the clamping direction C is independent of a fastening force of the fasteners 61, 62. In other words, a clamping force with which the retaining part 51 clamps the sealing apron block 2 onto the wall 7 is independent of a fastening force of the fasteners 61, 62.

The legs 52 of the retaining part 51 extend in the clamping direction C from the clamping distance D towards the sealing apron block 2 and are received within the slots 25. The saw teeth 53 protrude from the legs 52 into the sealing apron block 2 for retaining said sealing apron block 2. Preferably, the saw teeth 53 bite into the sealing apron block 2 over a depth of at least one millimeter. More preferably, the saw teeth 53 bite into the sealing apron block 2 over a depth between one and three millimeter. Most preferably, the saw teeth 53 bite into the sealing apron block 2 over a depth of two millimeter. The saw teeth 53 are made of a rigid material. Preferably, the saw teeth 53 are made of a metal. Most preferably, the saw teeth 53 are made of a steel alloy. In particular, the sealing apron block 2 is made of a material with a lower hardness than the material of the saw teeth 53. The sealing apron blocks 2 are preferably made of a deformable material, more preferably an elastically deformable material, most preferably rubber.

As is best shown in figure 4, in this exemplary embodiment, the common mounting member 6 comprises a mounting strip 60. The mounting strip 60 is fixedly mounted directly onto the wall 7 in the mounting plane P. The bracket 4 is arranged to be rigidly mounted to the mounting strip 60. The fasteners 61,62 comprise a pair of first fastening elements 61 associated with said mounting strip 60. The fasteners 61, 62 further comprise second fastening elements 62 for being fastened onto the first fastening elements 61. The first fastening elements 61 and the second fastening elements 62 are arranged for securing the bracket 4 with respect to the wall 7. In this particular embodiment, the first fastening elements 61 are threaded studs and the second fastening elements 62 are threaded nuts. Alternatively, the mounting strip 60 may for example be provided with threaded holes for receiving bolts therein.

The mounting strip 60 is mounted to the wall 7 in the mounting plane P. The mounting strip 60 extends in the transport direction U. The first fastening elements 61 extend from the mounting strip 60 in a direction opposite to the clamping direction C to provide distinct mounting points for the bracket 4.

In this exemplary embodiment, the mounting strip 60 is welded to the wall 7. Alternatively, the mounting strip 60 may be fixed to the wall 7 by bolting, adhering, or any other suitable fastening method for rigidly connecting the mounting strip 60 to the wall 7. The mounting strip 60 comprises cutouts 63 at its bottom side for providing weld locations such that a welding line or welding slag can be prevented to extend below the mounting strip 60.

In this embodiment, the mounting surface 41 of the mounting section 40 abuts the mounting strip 60. Alternatively the mounting surface 41 can directly abut the wall 7 in the mounting plane P. The bracket 4 is rigidly connected to the mounting strip 60 by fastening said second fastening elements 62 onto the first fastening elements 61. In other words, the mounting section 40 is rigidly mounted with respect to the wall 7.

A method for mounting and adjusting the sealing apron blocks 2 with respect to the wall 7 will be illustrated using figures 5-10.

Figures 5 and 8 show the sealing apron block 2 mounted to the wall 7 in the start position. The sealing apron block 2 and the bracket 4 have been mounted to the wall 7 by fixedly securing the mounting section 40 to the wall 7. The first profile 36 has been fitted between the second profile 37 of an adjacent further sealing apron block 2 and the wall 7 as shown in figure 3. The abutment surface 32 of the sealing apron block 2 is in direct abutment with the wall 7. The upper side of the sealing apron block 2 is located downstream of or below the mounting strip 60 in the sealing direction B. The protrusion 30 of the apron sealing block 2 has been fitted through the bracket opening 56. The bracket 4 has been rigidly mounted with respect to the wall 7 by fastening the second fastening elements 62 onto the first fastening elements 61.

The legs 52 of the retaining part 51 of the bracket 4 are placed in the grooves 27 of the sealing apron block 2 for retaining and/or guiding the sealing apron block 2 in the sealing direction B. The retaining part 51 is retaining the sealing apron block 2 at the one or more retaining positions. The sealing apron block 2 is clamped against the wall 7 in the clamping direction C by the bracket 4.

Movements of the sealing apron block 2 in the retaining direction A, for example due to irregularities in the transport surface 81, are suppressed by the retaining part 51 of the bracket 4. The saw teeth 53 of the retaining part 51 at least partly protrude into the main body 20 of the sealing apron block 2 for securely retaining the sealing apron block 2 at the one or more retaining positions.

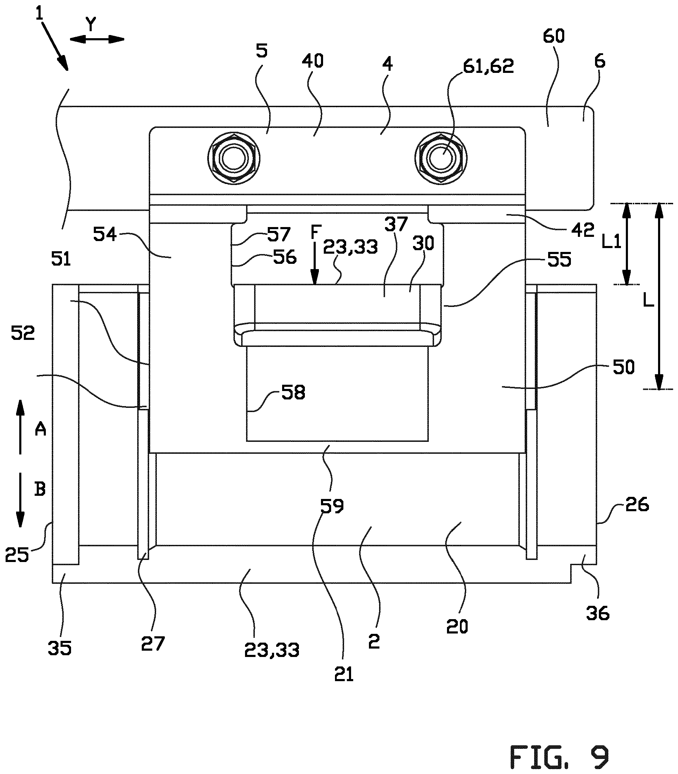

Figures 6 and 9 show the sealing apron block 2 mounted to the wall 7 in the intermediate position between the start position and the end position. The sealing apron block 2 has been adjusted in the sealing direction B along the first part L1 of the adjustment path L by exerting the adjustment force F to the striking surface 33 of the sealing apron block 2. The adjustment force F is for example exerted by striking the striking surface 33 with a hammer. The adjustment of the sealing apron block 2 along the adjustment path L displaces the retaining section 50 relative to the mounting section 40 through sliding contact with the retaining part 51. Preferably, the sealing apron block 2 is adjusted along the adjustment path L without loosening the mounting part 40 with respect to the wall 7. In other words, the connection between the first fastening elements 61 and the second fastening elements 62 can be unaltered.

In the intermediate position, the protrusion 30 is engaged by the guides 55. The guides 55 are received and engaged within the side recesses 28 of the protrusion 30. The guides 55 engage the sealing apron block 2 at the one or more guiding positions. The protrusion 30 is thus constrained by the bracket 4 in both the clamping direction C and the width direction Y.

At the location of the retaining part 51 the sealing apron block 2 is clamped against the wall 7 in the clamping direction C by the bracket 4. At said location of the retaining part 51, the legs 52 are received within the grooves 27 constraining the sealing apron block 2 in the width direction Y. The retaining part 51 engages the sealing apron block 2 at the one or more retaining positions. The one or more retaining positions are spaced apart from the one or more guiding positions. In this particular embodiment, the one or more retaining positions are spaced apart from the one or more guiding positions in both the width direction Y and the sealing direction B. Hence, the sealing apron block 2 is constrained in the width direction Y at both the location of the protrusion 30 and the location of the retaining part 51.

Figures 7 and 10 show the sealing apron block 2 in the end position. The sealing apron block 2 has been further adjusted in the sealing direction B over the second part L2 of the adjustment path L. In other words, the sealing apron block 2 has been adjusted over the entire adjustment path L. The guiding part 54 is in engagement with the sealing apron block 2 at the one or more guiding positions. In this embodiment, the retaining part 51 is in engagement with the sealing apron block 2 at a part of the one or more guiding positions. The retaining part 51 is partly running out of the engagement with the sealing apron block 2 in the sealing direction. In the end position, the protrusion 30 abuts the stop part 59 of the bracket 4. In particular, as shown in figure 11, the neck portion 38 of the protrusion 30 is securely held in place by the side recesses 28 and the bottom recess 29 to prevent rotation of the sealing apron block 2 relative to the bracket 5. The length of the adjustment path L is larger than fifty percent of the initial block height H of the sealing apron block 2. Preferably, the adjustment path is larger than fifty-five percent of the initial block height H, more preferably more than sixty percent.

In this exemplary embodiment, the length of the adjustment path L is equal to or substantially equal to the part of the initial block height H of the sealing apron block 2 below the protrusion 30.

It is to be understood that the above description is included to illustrate the operation of the preferred embodiments and is not meant to limit the scope of the invention. From the above discussion, many variations will be apparent to one skilled in the art that would yet be encompassed by the scope of the present invention, which is defined by the appended claims.

## Claims

1. Sealing apron device (1) for a transport system (11), wherein the transport system (11) comprises a conveyor (8) and a wall (7) arranged above said conveyor (8), wherein the sealing apron device (1) comprises a sealing apron block (2) for sealing gaps (70) between the wall (7) and the conveyor (8) in a sealing direction (B) and a holder (5) for holding said sealing apron block (2) relative to said wall (7) in a mounting plane (P) parallel to said sealing direction (B), wherein the sealing apron block (2) comprises a main body (20) and a protrusion (30) extending away from said main body (20) in a protrusion (30) direction perpendicular to the sealing direction (B), wherein the sealing apron block (2) is adjustable with respect to the holder (5) in the sealing direction (B) along an adjustment path (L) by applying blows of a hammer or a mallet to the protrusion (30), wherein the holder (5) comprises a bracket (4) with a mounting section (40) for mounting the bracket (4) relative to the wall (7) and a retaining section (50) for retaining the sealing apron block (2) in the sealing direction (B), wherein the retaining section (50) comprises a retaining part (51) for clamping the sealing apron block (2) in a clamping direction (B) transverse to the mounting plane (P), **characterized in that** the retaining section (50) further comprises a guiding part (54) for guiding the protrusion (30) of the sealing apron block (2) along at least a part of the adjustment path (L), wherein the guiding part (54) is arranged for engaging the protrusion (30) of the sealing apron block (2) along at least a part of the adjustment path (L).

2. Sealing apron device (1) according to claim 1, wherein the guiding part (54) and the protrusion (30) are in mutual engagement along at least a part of the adjustment path (L).

3. Sealing apron device (1) according to claim 1 or 2, wherein the sealing apron block (2) is arranged to be adjusted with respect to the holder (5) from a start position into an end position along the adjustment path (L), wherein the retaining part (51) is arranged for engaging the sealing apron block (2) at least when the sealing apron block (2) is in a first part (L1) of the adjustment path (L) between the start position and an intermediate position between the start position and the end position, preferably wherein:
- the guiding part (54) is arranged for engaging the protrusion (30) of the sealing apron block (2) at least when the sealing apron block (2) is in a second part (L2) of the adjustment path (L) between the intermediate position and the end position, preferably wherein the guiding part (54) and the retaining part (51) are arranged for simultaneously engaging the sealing apron block (2) in at least a part of the adjustment path (L); or
- the retaining part (51) is arranged for at least partially running out of the engagement with the sealing apron block (2) in the sealing direction when the sealing apron block (2) is in the second part (L2) of the adjustment path (L), preferably wherein the guiding part (54) and the retaining part (51) are arranged for simultaneously engaging the sealing apron block (2) in at least a part of the adjustment path (L).

4. Sealing apron device (1) according to any one of the preceding claims, wherein the guiding part (54) is arranged for engaging the sealing apron block (2) at one or more guiding positions, wherein the retaining part (51) is arranged for engaging the sealing apron block (2) at one or more retaining positions, wherein the one or more guiding positions are spaced apart from the one or more retaining positions.

5. Sealing apron device (1) according to any one of the preceding claims, wherein the guiding part (54) comprises one or more guides (55) extending in the sealing direction for engaging the protrusion (30) of the sealing apron block (2).

6. Sealing apron device (1) according to claim 5, wherein the bracket (4) comprises a bracket opening (56) for receiving the protrusion (30) in the protrusion (30) direction and wherein the one or more guides (55) comprises two guides (55) which are arranged on either side of the bracket opening (56) for engaging the part of the protrusion (30) extending through the bracket opening (56), preferably wherein the two guides (55) are formed by the edges of the bracket opening (56).

7. Sealing apron device (1) according to claim 6, wherein the protrusion (30) comprises a head portion (37) and a neck portion (38) that connects the head portion (37) to the main body (20), wherein the neck portion (38) has a neck width (X2) and the head portion (37) has a head width (X1) in a width direction (Y) parallel to the mounting plane (P) and perpendicular to the sealing direction, wherein the guides (55) are arranged for engaging the protrusion (30) at said neck portion (38), preferably wherein the bracket opening (56) has an upper portion (57) and lower portion (58) that is downstream with respect to said upper portion (57) in the sealing direction, wherein the upper portion (57) has a receiving width (S1) in the width direction (Y) that is equal to or greater than the head width (X1), wherein the lower portion (58) has a guiding width (S2) in the width direction (Y) that is smaller than the head width (X1) and equal to or larger than the neck width (X2), preferably wherein the guides (55) are arranged in the lower portion (58) only.

8. Sealing apron device (1) according to claim 7, wherein the bracket (4) comprises a stop part (59) for limiting a movement of the protrusion (30) in the sealing direction, preferably wherein the neck portion is defined by two side recesses (28) which are arranged for engaging the two guides (55) and a bottom recess (28) which is arranged for engaging the stop part (59).

9. Sealing apron device (1) according to any of the preceding claims, wherein the protrusion (30) direction is opposite to the clamping direction (B).

10. Sealing apron device (1) according to any of the preceding claims, wherein the retaining part (51) comprises one or more saw teeth for biting into the sealing apron block (2) in the clamping direction (B), preferably wherein:
- the one or more saw teeth each comprise a wedge-shaped surface that is inclined in the clamping direction (B) and the sealing direction towards the sealing apron block (2); and/or
- the retaining section (50) is resiliently flexible with respect to the mounting section (40) in a direction away from the sealing apron block (2), wherein the sealing apron block (2) is arranged to displace the retaining section (50) relative to the mounting section (40) through sliding contact with the wedge-shaped surface of the one or more saw teeth in the sealing direction; and/or
- the sealing apron block (2) comprises one or more grooves (27) extending through the main body (20) in the sealing direction, wherein each groove (27) is arranged for receiving the retaining part (51).

11. Sealing apron device (1) according to any of the preceding claims, wherein the protrusion (30) forms a striking surface (33) for receiving the blow of a hammer or a mallet in the sealing direction; and/or
wherein the main body (20) has a first side (21) and a second side (22) opposite to the first side (21) in the clamping direction (B), wherein the main body (20) comprises an abutment surface (32) at said second side (22) thereof for directly abutting the wall (7); and/or
wherein the retaining section (50) is arranged for retaining the sealing apron block (2) in a position relative to mounting section (40) such that the mounting plane (P) is coplanar with the wall (7).

12. Sealing apron device (1) according to any of the preceding claims, wherein the sealing apron device (1) comprises a further sealing apron block (2) directly adjacent to the sealing apron block (2), preferably wherein the sealing apron block (2) comprises a first profile (35) at its lateral side (25) facing the further sealing apron block (2) and the further sealing apron block (2) comprises a second profile (36) at its lateral side (26) facing the sealing apron block (2), wherein the first profile (35) of the sealing apron block (2) and the second profile (36) of the directly adjacent further sealing apron block (2) are complementary profiles, preferably wherein the sealing apron block (2) further comprises a third profile identical or substantially identical to the second profile (36) and/or wherein the first profile (35) and the second profile (36) are stepped profiles.

13. Assembly comprising a transport system (11) and a sealing apron device (1) according to any of the preceding claims, wherein the transport system (11) comprises a conveyor (8) and a wall (7) arranged above said conveyor (8).

14. Method for sealing a gap (70) between a wall (7) and a conveyor (8) using the sealing apron device (1) according to any of the claims 1-12, wherein the method comprises the step of mounting the sealing apron block (2) and the bracket (4) to the wall (7) by fixedly securing the mounting section (40) with respect to the wall (7).

15. Method according to claim 14, wherein the method further comprises the step of adjusting the sealing apron block (2) along the adjustment path (L) towards the conveyor (8) by exerting an adjustment force (F) to the sealing apron block (2) in the sealing direction, wherein the retaining section (50) is resiliently flexible with respect to the mounting section (40) in a direction away from the sealing apron block (2), wherein the adjustment of the sealing apron block (2) along the adjustment path (L) displaces the retaining section (50) relative to the mounting section (40) through sliding contact with the retaining part (51), preferably wherein the sealing apron block (2) is adjusted along the adjustment path (L) without loosening the mounting section (40) with respect to the wall (7).

## Patentansprüche

1. Dichtungsschürzenvorrichtung (1) für ein Transportsystem (11), wobei das Transportsystem (11) einen Förderer (8) und eine oberhalb des Förderers (8) angeordnete Wand (7) aufweist, wobei die Dichtungsschürzenvorrichtung (1) einen Dichtungsschürzenblock (2) zum Abdichten von Spalten (70) zwischen der Wand (7) und dem Förderer (8) in einer Abdichtungsrichtung (B) und einen Halter (5) zum Halten des Dichtungsschürzenblocks (2) relativ zu der Wand (7) in einer Montageebene (P) parallel zu der Abdichtungsrichtung (B) aufweist, wobei der Dichtungsschürzenblock (2) einen Hauptkörper (20) und einen Vor-sprung (30), der sich von dem Hauptkörper (20) in einer Vorsprungsrichtung senkrecht zu der Abdichtungsrichtung (B) weg erstreckt, aufweist, wobei der Dichtungsschürzenblock (2) in Bezug auf den Halter (5) in der Abdichtungsrichtung (B) entlang eines Verstellwegs (L) durch Aufbringen von Schlägen eines Hammers oder eines Schlägels auf den Vor-sprung (30) einstellbar ist, wobei der Halter (5) eine Halterung (4) mit einem Montageabschnitt (40) zum Montieren der Halterung (4) relativ zu der Wand (7) und einen Halteabschnitt (50) zum Halten des Dichtungsschürzenblocks (2) in der Abdichtungsrichtung (B) aufweist, wobei der Halteabschnitt (50) ein Halteteil (51) zum Klemmen des Dichtungsschürzenblocks (2) in einer Klemmrichtung (B) quer zu der Montageebene (P) aufweist, **dadurch gekennzeichnet, dass** der Halteabschnitt (50) des Weiteren ein Führungsteil (54) zum Führen des Vorsprungs (30) des Dichtungsschürzenblocks (2) entlang zumindest eines Teils des Verstellwegs (L) aufweist, wobei das Führungsteil (54) angeordnet ist, um mit dem Vorsprung (30) des Dichtungsschürzenblocks (2) entlang zumindest eines Teils des Verstellwegs (L) in Eingriff zu kommen.

2. Dichtungsschürzenvorrichtung (1) nach Anspruch 1, wobei das Führungsteil (54) und der Vorsprung (30) entlang zumindest eines Teils des Verstellwegs (L) in gegenseitigem Eingriff stehen.

3. Dichtungsschürzenvorrichtung (1) nach Anspruch 1 oder 2, wobei der Dichtungsschürzenblock (2) angeordnet ist, um in Bezug auf den Halter (5) von einer Startposition in eine Endposition entlang des Verstellwegs (L) verstellt zu werden, wobei das Halteteil (51) angeordnet ist, um mit dem Dichtungsschürzenblock (2) zumindest dann in Eingriff zu kommen, wenn der Dichtungsschürzenblock (2) in einem ersten Teil (L1) des Verstellwegs (L) zwischen der Startposition und einer Zwischenposition zwischen der Startposition und der Endposition ist, vorzugsweise wobei:
- das Führungsteil (54) angeordnet ist, um mit dem Vorsprung (30) des Dichtungsschürzenblocks (2) zumindest dann in Eingriff zu kommen, wenn der Dichtungsschürzenblock (2) in einem zweiten Teil (L2) des Verstellwegs (L) zwischen der Zwischen-position und der Endposition ist, vorzugsweise wobei das Führungsteil (54) und das Halte-teil (51) angeordnet sind, um in zumindest einem Teil des Verstellwegs (L) gleichzeitig mit dem Dichtungsschürzenblock (2) in Eingriff zu kommen; oder
- das Halteteil (51) angeordnet ist, um zumindest teilweise aus dem Eingriff mit dem Dichtungsschürzenblock (2) in der Abdichtungsrichtung herauszulaufen, wenn der Dichtungsschürzenblock (2) in dem zweiten Teil (L2) des Verstellwegs (L) ist, vorzugsweise wobei das Führungsteil (54) und das Halteteil (51) angeordnet sind, um in zumindest einem Teil des Verstellwegs (L) gleichzeitig mit dem Dichtungsschürzenblock (2) in Eingriff zu kommen.

4. Dichtungsschürzenvorrichtung (1) nach einem der vorhergehenden Ansprüche, wobei das Führungsteil (54) angeordnet ist, um mit dem Dichtungsschürzenblock (2) an einer oder mehreren Führungspositionen in Eingriff zu kommen, wobei das Halteteil (51) angeordnet ist, um mit dem Dichtungsschürzenblock (2) an einer oder mehreren Haltepositionen in Eingriff zu kommen, wobei die eine oder mehreren Führungspositionen von der einen oder den mehreren Haltepositionen beastandet sind.

5. Dichtungsschürzenvorrichtung (1) nach einem der vorhergehenden Ansprüche, wobei das Führungsteil (54) eine oder mehrere Führungen (55) aufweist, die sich in der Abdichtungsrichtung erstrecken, um mit dem Vorsprung (30) des Dichtungsschürzen-blocks (2) in Eingriff zu kommen.

6. Dichtungsschürzenvorrichtung (1) nach Anspruch 5, wobei die Halterung (4) eine Halterungsöffnung (56) zum Aufnehmen des Vorsprungs (30) in der Vorsprungsrichtung aufweist und wobei die eine oder die mehreren Führungen (55) zwei Führungen (55) aufweisen, die auf beiden Seiten der Halterungsöffnung (50) angeordnet sind, um mit dem Teil des Vorsprungs (30) in Eingriff zu kommen, der sich durch die Halterungsöffnung (56) hindurch erstreckt, vorzugsweise wobei die zwei Führungen (55) durch die Kanten bzw. Ränder der Halterungsöffnung (56) ausgebildet sind.

7. Dichtungsschürzenvorrichtung (1) nach Anspruch 6, wobei der Vorsprung (30) einen Kopfabschnitt (37) und einen den Kopfabschnitt (37) mit dem Hauptkörper (20) verbindenden Halsabschnitt (38) aufweist, wobei der Halsabschnitt (38) eine Halsbreite (X2) und der Kopfabschnitt (37) eine Kopfbreite (X1) in einer Breitenrichtung (Y) parallel zu der Montageebene (P) und senkrecht zu der Abdichtungsrichtung aufweist, wobei die Führungen (55) angeordnet sind, um mit dem Vorsprung (30) an dem Halsabschnitt (38) in Eingriff zu kommen, vorzugsweise wobei die Halterungsöffnung (56) einen oberen Ab-schnitt (57) und einen in Bezug auf den oberen Abschnitt (57) in der Abdichtungsrichtung stromabwärts gelegenen unteren Abschnitt (58) aufweist, wobei der obere Abschnitt (57) eine Aufnahmebreite (S1) in der Breitenrichtung (Y) aufweist, die gleich der oder größer als die Kopfbreite (X1) ist, wobei der untere Abschnitt (58) eine Führungsbreite (S2) in der Breitenrichtung (Y) aufweist, die kleiner als die Kopfbreite (X1) und gleich oder größer als die Halsbreite (X2) ist, vorzugsweise wobei die Führungen (55) nur in dem unteren Ab-schnitt (58) angeordnet sind.

8. Dichtungsschürzenvorrichtung (1) nach Anspruch 7, wobei die Halterung (4) ein Anschlagteil (59) zum Begrenzen einer Bewegung des Vorsprungs (30) in der Abdichtungsrichtung aufweist, vorzugsweise wobei der Halsabschnitt durch zwei seitliche Aussparungen (28), die angeordnet sind, um mit den zwei Führungen (55) in Eingriff zu kommen, und eine untere Aussparung (28), die angeordnet ist, um mit dem Anschlagteil (59) in Eingriff zu kommen, definiert ist.

9. Dichtungsschürzenvorrichtung (1) nach einem der vorhergehenden Ansprüche, wobei die Vorsprungsrichtung der Klemmrichtung (B) entgegengesetzt ist.

10. Dichtungsschürzenvorrichtung (1) nach einem der vorhergehenden Ansprüche, wobei das Halteteil (51) einen oder mehrere Sägezähne zum Einbeißen in den Dichtungsschürzenblock (2) in der Klemmrichtung (B) aufweist, vorzugsweise wobei:
- der eine oder die mehreren Sägezähne jeweils eine keilförmige Oberfläche aufweisen, die in der Klemmrichtung (B) und in der Abdichtungsrichtung hin zu dem Dichtungsschürzenblock (2) geneigt ist; und/oder
- der Halteabschnitt (50) in Bezug auf den Montageabschnitt (40) in einer Richtung weg von dem Dichtungsschürzenblock (2) elastisch flexibel ist, wobei der Dichtungsschürzenblock (2) angeordnet ist, um den Halteabschnitt (50) relativ zu dem Montageabschnitt (40) durch gleitenden Kontakt mit der keilförmigen Oberfläche des einen oder der mehreren Sägezähne in der Abdichtungsrichtung zu verschieben; und/oder
- der Dichtungsschürzenblock (2) eine oder mehrere Nuten (27) aufweist, die sich durch den Hauptkörper (20) hindurch in der Abdichtungsrichtung erstrecken, wobei jede Nut (27) angeordnet ist, um das Halteteil (51) aufzunehmen.

11. Dichtungsschürzenvorrichtung (1) nach einem der vorhergehenden Ansprüche, wobei der Vorsprung (30) eine Schlagoberfläche (33) zum Aufnehmen des Schlags eines Hammers oder eines Schlägels in der Abdichtungsrichtung ausbildet; und/oder
wobei der Hauptkörper (20) eine erste Seite (21) und eine der ersten Seite (21) in der Klemmrichtung (B) gegenüberliegende zweite Seite (22) aufweist, wobei der Hauptkörper (20) an der zweiten Seite (22) eine Anlagefläche (32) zur direkten Anlage an der Wand (7) aufweist; und/oder
wobei der Halteabschnitt (50) angeordnet ist, um den Dichtungsschürzenblock (2) in einer Position relativ zu dem Montageabschnitt (40) zu halten, so dass die Montageebene (P) koplanar mit der Wand (7) ist.

12. Dichtungsschürzenvorrichtung (1) nach einem der vorhergehenden Ansprüche, wobei die Dichtungsschürzenvorrichtung (1) einen weiteren Dichtungsschürzenblock (2) direkt benachbart zu dem Dichtungsschürzenblock (2) aufweist, vorzugsweise wobei der Dichtungsschürzenblock (2) an seiner dem weiteren Dichtungsschürzenblock (2) zugewandten seitlichen Seite (25) ein erstes Profil (35) aufweist und der weitere Dichtungsschürzenblock (2) an seiner dem Dichtungsschürzenblock (2) zugewandten seitlichen Seite (26) ein zweites Profil (36) aufweist, wobei das erste Profil (35) des Dichtungsschürzenblocks (2) und das zweite Profil (36) des direkt benachbarten weiteren Dichtungsschürzenblocks (2) komplementäre Profile sind, vorzugsweise wobei der Dichtungsschürzenblock (2) des Weiteren ein mit dem zweiten Profil (36) identisches oder im Wesentlichen identisches drittes Profil aufweist und/oder wobei das erste Profil (35) und das zweite Profil (36) gestufte Profile sind.

13. Baugruppe mit einem Transportsystem (11) und einer Dichtungsschürzenvorrichtung (1) nach einem der vorhergehenden Ansprüche, wobei das Transportsystem (11) einen Förderer (8) und eine oberhalb des Förderers (8) angeordnete Wand (7) aufweist.

14. Verfahren zum Abdichten eines Spalts (70) zwischen einer Wand (7) und einem Förderer (8) mittels der Dichtungsschürzenvorrichtung (1) nach einem der Ansprüche 1-12, wobei das Verfahren den Schritt eines Montierens des Dichtungsschürzenblocks (2) und der Halterung (4) an der Wand (7) durch festes Anbringen des Montageabschnitts (40) in Bezug auf die Wand (7) aufweist.

15. Verfahren nach Anspruch 14, wobei das Verfahren des Weiteren den Schritt eines Verstellens des Dichtungsschürzenblocks (2) entlang des Verstellwegs (L) hin zu dem Förderer (8) durch Ausüben einer Verstellkraft (F) auf den Dichtungsschürzenblock (2) in der Abdichtungsrichtung aufweist, wobei der Halteabschnitt (50) in Bezug auf den Montageabschnitt (40) in einer Richtung weg von dem Dichtungsschürzenblock (2) elastisch flexibel ist, wobei die Verstellung des Dichtungsschürzenblocks (2) entlang des Verstell-wegs (L) den Halteabschnitt (50) durch gleitenden Kontakt mit dem Halteteil (51) relativ zu dem Montageabschnitt (40) verschiebt, vorzugsweise wobei der Dichtungsschürzenblock (2) entlang des Verstellwegs (L) verstellt wird, ohne den Montageabschnitt (40) in Bezug auf die Wand (7) zu lockern.

## Revendications

1. Dispositif tablier d'étanchéité (1) pour un système de transport (11), dans lequel le système de transport (11) comprend un convoyeur (8) et une paroi (7) agencée au-dessus dudit convoyeur (8), dans lequel le dispositif tablier d'étanchéité (1) comprend un bloc de tablier d'étanchéité (2) pour rendre étanches des espaces (70) entre la paroi (7) et le convoyeur (8) dans une direction d'étanchéité (B) et un dispositif de maintien (5) pour maintenir ledit bloc de tablier d'étanchéité (2) par rapport à ladite paroi (7) dans un plan de montage (P) parallèle à ladite direction d'étanchéité (B), dans lequel le bloc de tablier d'étanchéité (2) comprend un corps principal (20) et une saillie (30) s'étendant à partir dudit corps principal (20) dans une direction de saillie (30) perpendiculaire à la direction d'étanchéité (B), dans lequel le bloc de tablier d'étanchéité (2) est ajustable par rapport au dispositif de maintien (5) dans la direction d'étanchéité (B) le long d'un trajet d'ajustement (L) en appliquant des coups de marteau ou de maillet sur la saillie (30), dans lequel le dispositif de maintien (5) comprend un support (4) avec une section de montage (40) pour monter le support (4) par rapport à la paroi (7) et une section de retenue (50) pour retenir le bloc de tablier d'étanchéité (2) dans la direction d'étanchéité (B), dans lequel la section de retenue (50) comprend une partie de retenue (51) pour serrer le bloc de tablier d'étanchéité (2) dans une direction de serrage (B) transversale au plan de montage (P), **caractérisé en ce que** la section de retenue (50) comprend en outre une partie de guidage (54) pour guider la saillie (30) du bloc de tablier d'étanchéité (2) le long d'au moins une partie du trajet d'ajustement (L), dans lequel la partie de guidage (54) est agencée pour mettre en prise la saillie (30) du bloc de tablier d'étanchéité (2) le long d'au moins une partie du trajet d'ajustement (L).

2. Dispositif tablier d'étanchéité (1) selon la revendication 1, dans lequel la partie de guidage (54) et la saillie (30) sont mis en prise mutuellement le long d'au moins une partie du trajet d'ajustement (L).

3. Dispositif tablier d'étanchéité (1) selon la revendication 1 ou 2, dans lequel le bloc de tablier d'étanchéité (2) est agencé pour être ajusté par rapport au support (5) à partir d'une position de départ vers une position d'arrivée le long du trajet d'ajustement (L), dans lequel la partie de retenue (51) est agencée pour mettre en prise le bloc de tablier d'étanchéité (2) au moins lorsque le bloc de tablier d'étanchéité (2) est dans une première partie (L1) du trajet d'ajustement (L) entre la position de départ et une position intermédiaire entre la position de départ et la position d'arrivée, de préférence dans lequel :
- la partie de guidage (54) est agencée pour mettre en prise la saillie (30) du bloc de tablier d'étanchéité (2) au moins lorsque le bloc de tablier d'étanchéité (2) se trouve dans une seconde partie (L2) du trajet d'ajustement (L) entre la position intermédiaire et la position d'arrivée, de préférence dans lequel la partie de guidage (54) et la partie de retenue (51) sont agencées pour mettre en prise simultanément le bloc de tablier d'étanchéité (2) dans au moins une partie du trajet d'ajustement (L) ; ou
- la partie de retenue (51) est agencée pour sortir au moins partiellement de la mise en prise avec le bloc de tablier d'étanchéité (2) dans la direction d'étanchéité lorsque le bloc de tablier d'étanchéité (2) se trouve dans la seconde partie (L2) du trajet d'ajustement (L), de préférence dans lequel la partie de guidage (54) et la partie de retenue (51) sont agencées pour mettre en prise simultanément le bloc de tablier d'étanchéité (2) dans au moins une partie du trajet d'ajustement (L).

4. Dispositif tablier d'étanchéité (1) selon l'une quelconque des revendications précédentes, dans lequel la partie de guidage (54) est agencée pour mettre en prise le bloc de tablier d'étanchéité (2) au niveau d'une ou de plusieurs positions de guidage, dans lequel la partie de retenue (51) est agencée pour mettre en prise le bloc de tablier d'étanchéité (2) au niveau d'une ou de plusieurs positions de retenue, dans lequel les une ou plusieurs positions de guidage sont espacées des une ou plusieurs positions de retenue.

5. Dispositif tablier d'étanchéité (1) selon l'une quelconque des revendications précédentes, dans lequel la partie de guidage (54) comprend un ou plusieurs guides (55) s'étendant dans la direction d'étanchéité pour mettre en prise la saillie (30) du bloc de tablier d'étanchéité (2).

6. Dispositif tablier d'étanchéité (1) selon la revendication 5, dans lequel le support (4) comprend une ouverture d'appui (56) pour recevoir la saillie (30) dans la direction de la saillie (30) et dans lequel les un ou plusieurs guides (55) comprennent deux guides (55) qui sont agencés de chaque côté de l'ouverture de support (56) pour mettre en prise la partie de la saillie (30) s'étendant à travers l'ouverture de support (56), de préférence dans lequel les deux guides (55) sont formés par les bords de l'ouverture de support (56).

7. Dispositif tablier d'étanchéité (1) selon la revendication 6, dans lequel la saillie (30) comprend une partie de tête (37) et une partie de col (38) qui relie la partie de tête (37) au corps principal (20), dans lequel la partie de col (38) présente une largeur de col (X2) et la partie de tête (37) présente une largeur de tête (X1) dans une direction de largeur (Y) parallèle au plan de montage (P) et perpendiculaire à la direction d'étanchéité, dans lequel les guides (55) sont agencés pour venir en prise avec la saillie (30) au niveau dudit col (38), de préférence dans lequel l'ouverture d'appui (56) présente une partie supérieure (57) et une partie inférieure (58) qui est en aval par rapport à ladite partie supérieure (57) dans la direction d'étanchéité, dans lequel la partie supérieure (57) présente une largeur de réception (S1) dans la direction de largeur (Y) qui est égale ou supérieure à la largeur de tête (X1), dans lequel la partie inférieure (58) présente une largeur de guidage (S2) dans la direction de largeur (Y) qui est inférieure à la largeur de tête (X1) et égale ou supérieure à la largeur de col (X2), de préférence dans lequel les guides (55) sont agencés uniquement dans la partie inférieure (58).

8. Dispositif tablier d'étanchéité (1) selon la revendication 7, dans lequel le support (4) comprend une partie d'arrêt (59) pour limiter un déplacement de la saillie (30) dans la direction d'étanchéité, de préférence dans lequel la partie de col est définie par deux évidements latéraux (28) qui sont agencés pour une mise en prise des deux guides (55) et un évidement inférieur (28) qui est agencé pour une mise en prise de la partie d'arrêt (59).

9. Dispositif tablier d'étanchéité (1) selon l'une quelconque des revendications précédentes, dans lequel la direction de la saillie (30) est opposée à la direction de serrage (B).

10. Dispositif tablier d'étanchéité (1) selon l'une quelconque des revendications précédentes, dans lequel la partie de retenue (51) comprend une ou plusieurs dents de scie pour mordre dans le bloc de tablier d'étanchéité (2) dans la direction de serrage (B), de préférence dans lequel
- les une ou plusieurs dents de scie comprennent chacune une surface en forme de coin qui est inclinée dans la direction de serrage (B) et la direction d'étanchéité vers le bloc de tablier d'étanchéité (2) ; et/ou
- la section de retenue (50) est flexible élastiquement par rapport à la section de montage (40) dans une direction s'éloignant du bloc de tablier d'étanchéité (2), dans lequel le bloc de tablier d'étanchéité (2) est agencé pour déplacer la section de retenue (50) par rapport à la section de montage (40) par contact coulissant avec la surface en forme de coin des une ou plusieurs dents de scie dans la direction d'étanchéité ; et/ou
- le bloc de tablier d'étanchéité (2) comprend une ou plusieurs rainures (27) s'étendant à travers le corps principal (20) dans la direction d'étanchéité, dans lequel chaque rainure (27) est agencée pour recevoir la partie de retenue (51).

11. Dispositif tablier d'étanchéité (1) selon l'une quelconque des revendications précédentes, dans lequel la saillie (30) forme une surface de frappe (33) pour recevoir le coup d'un marteau ou d'un maillet dans la direction d'étanchéité ; et/ou
dans lequel le corps principal (20) présente un premier côté (21) et un second côté (22) opposé au premier côté (21) dans la direction de serrage (B), dans lequel le corps principal (20) comprend une surface de butée (32) au niveau dudit second côté (22) de celui-ci pour venir directement en butée contre la paroi (7) ; et/ou
dans lequel la section de retenue (50) est agencée pour retenir le bloc de tablier d'étanchéité (2) dans une position par rapport à la section de montage (40) de telle sorte que le plan de montage (P) soit coplanaire à la paroi (7) .

12. Dispositif tablier d'étanchéité (1) selon l'une quelconque des revendications précédentes, dans lequel le dispositif tablier d'étanchéité (1) comprend un bloc de tablier d'étanchéité supplémentaire (2) directement adjacent au bloc de tablier d'étanchéité (2), de préférence dans lequel le bloc de tablier d'étanchéité (2) comprend un premier profil (35) au niveau de son côté latéral (25) faisant face au bloc de tablier d'étanchéité supplémentaire (2) et le bloc de tablier d'étanchéité supplémentaire (2) comprend un deuxième profil (36) au niveau de son côté latéral (26) faisant face au bloc de tablier d'étanchéité (2), dans lequel le premier profil (35) du bloc de tablier d'étanchéité (2) et le deuxième profil (36) du bloc de tablier d'étanchéité supplémentaire (2) directement adjacent sont des profils complémentaires, de préférence dans lequel le bloc de tablier d'étanchéité (2) comprend en outre un troisième profil identique ou sensiblement identique au deuxième profil (36) et/ou dans lequel le premier profil (35) et le deuxième profil (36) sont des profils étagés.

13. Ensemble comprenant un système de transport (11) et un dispositif tablier d'étanchéité (1) selon l'une quelconque des revendications précédentes, dans lequel le système de transport (11) comprend un convoyeur (8) et une paroi (7) agencée au-dessus dudit convoyeur (8).

14. Procédé pour rendre étanche un espace (70) entre une paroi (7) et un convoyeur (8) en utilisant le dispositif tablier d'étanchéité (1) selon l'une quelconque des revendications 1 à 12, dans lequel le procédé comprend l'étape de montage du bloc de tablier d'étanchéité (2) et du support (4) sur la paroi (7) en fixant fermement la section de montage (40) par rapport à la paroi (7).

15. Procédé selon la revendication 14, dans lequel le procédé comprend en outre l'étape consistant à ajuster le bloc de tablier d'étanchéité (2) le long du trajet d'ajustement (L) vers le convoyeur (8) en exerçant une force d'ajustement (F) sur le bloc de tablier d'étanchéité (2) dans la direction d'étanchéité, dans lequel la section de retenue (50) est flexible élastiquement par rapport à la section de montage (40) dans une direction s'éloignant du bloc de tablier d'étanchéité (2), dans lequel l'ajustement du bloc de tablier d'étanchéité (2) le long du trajet d'ajustement (L) déplace la section de retenue (50) par rapport à la section de montage (40) par contact coulissant avec la partie de retenue (51), de préférence dans lequel le bloc de tablier d'étanchéité (2) est ajusté le long du trajet d'ajustement (L) sans desserrer la section de montage (40) par rapport à la paroi (7).
